# EUROPÄISCHE PATENTANMELDUNG

(11) **EP 3 878 620 A1**
(43) Veröffentlichungstag der Anmeldung: **15.09.2021**
(21) Anmeldenummer: 20162330.3
(22) Anmeldetag: 11.03.2020
(51) Int. Cl.: B29C 45/00

(54) **VERFAHREN ZUR VOLLAUTOMATISIERBAREN PROZESSOPTIMIERTEN FERTIGUNG VON LICHTDURCHLÄSSIGEN KFZ-AUSSENBAUTEILEN INKLUSIVE SCHUTZBESCHICHTUNG**

(71) Anmelder: ZKW Group GmbH, 3250 Wieselburg (AT)
(72) Erfinder: Gürtl, Josef, 3233 Kilb (AT)
(74) Vertreter: Patentanwaltskanzlei Matschnig & Forsthuber OG

(57) **Zusammenfassung**

Die Erfindung betrifft ein Verfahren zur vollautomatisierbaren prozessoptimierten Fertigung von lichtdurchlässigen KFZ-Außenbauteilen inklusive Schutzbeschichtung in Form beschichteter Spritzgusskörper, umfassend die folgenden Schritte:
a) Bereitstellen eines Spritzgusswerkzeuges (2) umfassend eine erste Werkzeughälfte (2a) und eine zweite Werkzeughälfte (2b), die zum Eingriff in die erste Werkzeughälfte (2a) eingerichtet ist und dergestalt ausgebildet ist, dass im geschlossenen Zustand des Spritzgusswerkzeuges (2) zwischen der ersten und zweiten Werkzeughälfte (2a, 2b) ein einen auszubildenden Spritzgusskörper festlegender erster Hohlraum (3) ausgebildet und umschlossen wird,
b) Schließen des Spritzgusswerkzeuges (2),
c) Herstellen eines lichtdurchlässigen Spritzgusskörpers (5) durch Ausfüllen des ersten Hohlraumes (3) mit lichtdurchlässigem Spritzgussmaterial (4),
d) Exponieren einer zu beschichtenden Seite des Spritzgusskörpers (5) durch Entfernen der zweiten Werkzeughälfte (2b),
e) Heranführen einer dritten Werkzeughälfte (6) an die zu beschichtende Seite des Spritzgusskörpers (5) und Schließen mit der ersten Werkzeughälfte (2a), wobei die dritte Werkzeughälfte (6) dergestalt ausgebildet ist, dass zwischen der dritten Werkzeughälfte (6) und der zu beschichtenden Seite des Spritzgusskörpers (5) ein die Beschichtung (5a) festlegender zweiter Hohlraum (7) verbleibt,
f) Aufbringen der Schutzbeschichtung (5a) durch Fluten des zweiten Hohlraumes (7) mit PU Polyurethan, insbesondere PUR Polyurethanreaktiv, oder PUA Polyurethanacrylat,
g) Aushärten der Beschichtung für eine vorgebbare Zeitdauer t,
h) Entnahme des beschichteten Spritzgusskörpers (5).

## Beschreibung

Die Erfindung betrifft ein Verfahren zur vollautomatisierbaren prozessoptimierten Fertigung von lichtdurchlässigen KFZ-Außenbauteilen inklusive Schutzbeschichtung.

Weiters betrifft die Erfindung ein schutzbeschichtetes lichtdurchlässiges KFZ-Außenbauteil in Form eines beschichteten Spritzgussbauteils hergestellt nach dem erfindungsgemäßen Verfahren. Zudem betrifft die Erfindung ein Kraftfahrzeug umfassend ein erfindungsgemäßes schutzbeschichtetes lichtdurchlässiges KFZ-Außenbauteil.

Lichtdurchlässige KFZ-Außenbauteile sind aus dem Stand der Technik bekannt. Diese bestehen beispielsweise aus Polycarbonat, wobei die den Witterungseinflüssen zugewandte Außenseite eines solchen Außenbauteils mit einer Schutzschicht versehen wird. Diese Schutzschicht wird üblicherweise mittels einem Lackierverfahren hergestellt, wobei ein sogenannter Hardcoating-Layer auf das Trägermaterial aufgebracht wird. Diese schützende Lackschicht zeichnet sich durch eine hohe Kratzfestigkeit und Witterungsbeständigkeit aus und ist damit dazu geeignet, gewünschte optische Eigenschaften des KFZ-Außenbauteils möglichst lange zu konservieren.

Das Aufbringen dieser schützenden Lackschicht ist allerdings kosten- und zeitintensiv. Die lichtdurchlässigen KFZ-Außenbauteile werden typischerweise in einem Spritzgussverfahren hergestellt. Nach der Herstellung der Spritzgusskörper müssen diese aus der Spritzgussanlage entnommen und zu einer Lackieranlage transportiert werden, um die Hardcoating-Schicht aufzubringen. Vor dem Lackieren muss der Spritzgusskörper gegebenenfalls von Verunreinigungen wie z.B. Staubpartikeln gereinigt werden, da z.B. Einschlüsse von Staubpartikeln zu Unebenheiten im Lackbild führen. Nach erfolgter Lackierung müssen die Bauteile wieder aus der Lackieranlage entnommen und auf Fehler geprüft werden. Dabei können Fehler wie z.B. Orangenhautbildung detektiert werden. Fehlerhafte Bauteile werden ausgeschieden. Diese Nachteile haben zur Folge, dass die Beschichtung mit einem Hardcoating-Layer kostenintensiv ist. Eine hohe Ausnützung von Hardcoating-Anlagen ist damit besonders erstrebenswert. Diese hohe Ausnützung lässt sich mit größeren Bauteilen wie z.B. Abdeckscheiben von Fahrzeugscheinwerfern gut realisieren, bei kleineren Bauteilen wie z.B. Designelementen oder Abdeckscheiben von Nebelleuchten, Fahrtrichtungsanzeigern, etc. ist die Ausnützung der Hardcoating-Anlage aufgrund der erforderlichen Abstände zwischen den einzelnen Bauteilen während des Beschichtungsvorgangs deutlich geringer.

Eine Aufgabe der Erfindung besteht daher darin ein Verfahren zur vollautomatisierbaren prozessoptimierten Fertigung von lichtdurchlässigen KFZ-Außenbauteilen inklusive Schutzbeschichtung zu schaffen, mit dem die obig genannten Nachteile des Standes der Technik überwunden werden.

Dies Aufgabe wird mit einem Verfahren eingangs genannter Art gelöst, indem erfindungsgemäß lichtdurchlässige KFZ-Außenbauteile inklusive Schutzbeschichtung in Form beschichteter Spritzgusskörper mit Hilfe der folgenden Schritte geschaffen werden:
a) Bereitstellen eines Spritzgusswerkzeuges umfassend eine erste Werkzeughälfte und eine zweite Werkzeughälfte, die zum Eingriff in die erste Werkzeughälfte eingerichtet ist und dergestalt ausgebildet ist, dass im geschlossenen Zustand des Spritzgusswerkzeuges zwischen der ersten und zweiten Werkzeughälfte ein einen auszubildenden Spritzgusskörper festlegender erster Hohlraum ausgebildet und umschlossen wird,
b) Schließen des Spritzgusswerkzeuges,
c) Herstellen eines lichtdurchlässigen Spritzgusskörpers durch Ausfüllen des ersten Hohlraumes mit lichtdurchlässigem Spritzgussmaterial,
d) Exponieren einer zu beschichtenden Seite des Spritzgusskörpers durch Entfernen der zweiten Werkzeughälfte,
e) Heranführen einer dritten Werkzeughälfte an die zu beschichtende Seite des Spritzgusskörpers und Schließen mit der ersten Werkzeughälfte, wobei die dritte Werkzeughälfte dergestalt ausgebildet ist, dass zwischen der dritten Werkzeughälfte und der zu beschichtenden Seite des Spritzgusskörpers ein die Beschichtung festlegender zweiter Hohlraum verbleibt,
f) Aufbringen der Schutzbeschichtung durch Fluten des zweiten Hohlraumes mit PU Polyurethan,, insbesondere PUR Polyurethanreaktiv, oder PUA, d.h. Polyurethanacrylat,
g) Aushärten der Beschichtung für eine vorgebbare Zeitdauer t,
h) Entnahme des beschichteten Spritzgusskörpers.

Damit kann die Herstellung des Spritzgusskörpers und das Aufbringen der Schutzbeschichtung durch die gleiche Fertigungsanlage erfolgen. Alle drei Werkzeughälften sind in der Anlage angeordnet, wodurch die Fertigung rasch und effizient erfolgen kann. Auf diese Weise müssen keine längeren Transportwege während der Fertigung in Kauf genommen werden, wodurch auch die Gefahr der Verschmutzung der Bauteiloberfläche deutlich reduziert wird. Bei der ersten Werkzeughälfte handelt es sich dabei um die sog. Auswerferseite der Anlage, d.h. der Spritzgusskörper verbleibt während der gesamten Fertigung in dieser Werkzeughälfte und wird nach Abschluss des letzten Herstellungsschrittes aus dieser Werkzeughälfte entnommen.

Insbesondere kann vorgesehen sein, dass der zweite Hohlraum gemäß Schritt e) dergestalt ausgebildet ist, dass die Schichtdicke gemäß Schritt f) zwischen 0,3mm bis 1mm beträgt. Dieser Schichtdickenbereich hat sich in Praxis als optimal erwiesen.

Weiters kann vorgesehen sein, dass die Beschichtung aus reaktivem Polyurethan besteht, wobei diese Beschichtung durch gleichzeitige Zufuhr zweier Komponenten während des Flutens gemäß Schritt f) erfolgt, nämlich PU und eines Reaktivmaterials zur Härtung des PU.

Dass Polyurethan (PU) kann mit reaktiver Komponente vermengt werden. Es können also zwei Komponenten beim Fluten auf den Spritzgusskörper aufgebracht werden, wobei diese Komponenten während des Aufbringens auf den Spritzgusskörper vermengt werden. PU bildet dabei das Basismaterial, als Reaktivmaterial kann z.B. Isocyanat verwendet werden. Bei dem Flutungsvorgang reagieren die Komponenten dann auf dem Spritzgusskörper miteinander und sorgen für eine feste Verbindung der Komponenten sowie mit dem Spritzgusskörper. Beiden Komponenten können mit einer Temperatur zwischen 80°C und 120°C auf den Spritzgusskörper aufgebracht werden. Ein beispielhaftes Mischerverhältnis könnte z.B. 100g Polyurethan auf 197g Isocyanat lauten, also ein Mischverhältnis von in etwa 1:2. Polyurethanbeschichtungen haben selbstheilende Eigenschaften. Mechanische Deformationen der Beschichtung - z.B. Kratzspuren - können durch Wärmeeintrag in die Beschichtung wieder geglättet werden. Ein solcher Wärmeeintrag kann bereits durch die Umgebungswärme in ausreichender Menge vorhanden sein. Insbesondere kann auf ein Außenbauteil auftreffendes Sonnenlicht für entsprechenden Wärmeeintrag sorgen. Auch ist es denkbar, dass z.B. eine KFZ-Lichtquelle eine entsprechend beschichtete Abdeckscheibe mit entsprechend Abwärme versorgt. Beispielsweise kann sich entsprechend beschichtetes zerkratztes Material innerhalb von Sekunden bei 60°C wieder spannen und so bestehende Kratzspuren beheben.

Insbesondere kann vorgesehen sein, dass das Reaktivmaterial aus Isocyanat besteht.

Weiters kann vorgesehen sein, dass das Beschichten gemäß Schritt f) bei einer Temperatur des Spritzgusskörpers und der Kontaktfläche des dritten Spritzgusswerkzeuges in Höhe zwischen 80° und 120°C erfolgt.

Weiters kann vorgesehen sein, dass das Spritzgussmaterial aus Polycarbonat besteht. Polycarbonat ist ein besonders robustes Material und damit als tragende Basis des Spritzgusskörpers sehr gut geeignet. Außerdem lässt sich Polycarbonat gut mit den genannten Materialien beschichten. Polycarbonat zeichnet sich zudem durch eine hohe Transparenz, eine hohe Wärmeformbeständigkeit (kurzfristig bis zu 150°), eine hohe Steifigkeit und sowie hohe Festigkeit aus.

Insbesondere kann vorgesehen sein, dass das Spritzgussmaterial aus PMMA (Polymethylmethacrylat) besteht. PMMA zeichnet sich durch eine ausgezeichnete Lichtdurchlässigkeit (∼ 92%), eine polierfähige Oberfläche, hohe Steifigkeit, hohe Härte (und dadurch geringe Kratzempfindlichkeit) und dadurch eine besondere Eignung bei der Anwendung in der LED-Technik aus.

Weiters kann vorgesehen sein, dass die Zeitdauer t der Härtung gemäß Schritt g) zwischen 30 Sekunden und 4 Minuten, vorzugsweise weniger als 1 Minute beträgt und die Entnahme gemäß Schritt h) erst nach Ablauf dieser Zeitdauer erfolgt. Diese Zeitdauer hat sich für die genannten Materialien als optimal erwiesen.

Insbesondere kann vorgesehen sein, dass das Herstellen des lichtdurchlässigen Spritzgusskörpers gemäß Schritt c) unter Heranziehung eines transparenten Materials erfolgt. Unter dem Ausdruck "transparentes Material" wird ein Material verstanden, das keine Eigenfarbe aufweist bzw. keine Färbung des dieses Material durchdringenden Lichts verursacht.

Weiters kann vorgesehen sein, dass die die Beschichtung begrenzende Fläche der dritten Werkzeughälfte eine Strukturierung aufweist. Unter einer Strukturierung wird eine Oberflächengestaltung verstanden, die nicht glatt ist, sondern eine von einer glatten Oberfläche abweichende Form aufweist, die beispielsweise mit dem freien Auge erkennbar ist. Es können lichtstreuende Elemente durch die Oberflächenausgestaltung ausgebildet werden, auch können Narbungen, Muster, Schriftzüge usw. in Form einer Strukturierung der Oberfläche in die Beschichtung eingebracht werden, indem das "Negativ" zur Strukturierung an der die Beschichtung begrenzenden Fläche der dritten Werkzeughälfte ausgebildet ist. Durch Ausbilden der Beschichtung mit Hilfe einer Werkzeughälfte kann die Oberfläche der Beschichtung weitgehend frei gestaltet werden. Auch die Gestaltung einer matten Oberfläche ist dadurch auf einfache Weise möglich. Im Gegensatz zu Lackbeschichtungen, deren Oberfläche durch die Oberflächenspannung der Lackschicht bestimmt wird und damit feine Strukturierungen unmöglich macht (diese werden "verschwommen"), können durch diese Art der Beschichtung fein strukturierte Oberflächen geschaffen werden. Das erhitzte Beschichtungsmaterial ist dünnflüssig wie Wasser und daher hervorragend dazu geeignet, Oberflächenstrukturen scharf abzubilden. Anders ausgedrückt, bedeutet dass, dass im Gegenteil zu einer Lackbeschichtung, bei der die Oberfläche durch die Oberflächenspannung des Lackes festgelegt wird und damit matte Strukturen "verschwommen" werden bzw. wieder klar werden, ist es mit dieser Beschichtung möglich, matte Strukturen bzw. strukturierte Oberflächen, die durch das Werkzeug vorgegeben werden, exakt abzubilden. Auch ist dabei ein deutlich geringerer Ausschuss als beispielsweise bei Lackbeschichtungen zu erwarten, da keine Orangenhautbildung oder ähnliche Probleme zu auftreten. Das Eindringen von Staub ist deutlich unwahrscheinlicher und selbst wenn ein Staubpartikel eindringt, sind die Auswirkungen geringer, da damit nicht die Oberflächenspannung einer Lackschicht beeinflusst wird, sondern der Staubpartikel einfach "eingepresst" wird.

Insbesondere kann vorgesehen sein, dass in die Beschichtung in Schritt f) lichtstreuende und/oder zumindest teilweise lichtabsorbierende Designpartikel eingebracht werden. Bei den Designpartikeln kann es sich beispielsweise um Farbpartikel handeln, die eine Färbung der Beschichtung verursachen. Auch können diese Designpartikel lichtstreuend wirken und insbesondere einen "Glitzereffekt" verursachen. Durch Einsatz der Designpartikel können diverse Lackeffekte realisiert werden.

Weiters kann vorgesehen sein, dass die erste Werkzeughälfte zum Lösen von der zweiten Werkzeughälfte verschieb- oder verdrehbar gelagert ist. Die erste Werkzeughälfte kann z.B. in Form eines Schiebewerkzeugs linear verschiebbar ausgebildet sein und so zur dritten Werkzeughälfte auf einfache Weise verfahren werden.

Insbesondere kann vorgesehen sein, dass die erste Werkzeughälfte um 180° verdrehbar gelagert ist, wobei die erste Werkzeughälfte zudem beidseitig zum Eingriff in die zweite Werkzeughälfte ausgebildet ist, und damit mit jeder 180°-Drehung ein Schließen mit der zweiten Werkzeughälfte ermöglicht, wobei das Spritzgusswerkzeug weiters dazu eingerichtet ist, innerhalb des Zyklus der Ausbildung eines Spritzgusskörpers im ersten Hohlraum einen weiteren auf der gegenüberliegenden Seite der ersten Werkzeughälfte liegenden Spritzgusskörper durch Eingriff in die dritte Werkzeughälfte ausgebildeten zweiten Hohlraum zeitgleich in einem Schritt f) zu beschichten.

Die Erfindung betrifft weiters ein erfindungsgemäßes schutzbeschichtetes lichtdurchlässiges KFZ-Außenbauteil in Form eines beschichteten Spritzgussbauteils hergestellt nach dem erfindungsgemäßen Verfahren.

Insbesondere kann vorgesehen sein, dass das schutzbeschichtetes lichtdurchlässige KFZ-Außenbauteil als Abdeckscheibe eines Kraftfahrzeugscheinwerfers ausgebildet ist. Alternativ dazu kann es sich bei dem lichtdurchlässigen KFZ-Außenbauteil beispielsweise um ein Designelement, eine Abdeckscheibe einer Nebelleuchte, einer Abdeckscheibe eines Fahrtrichtungsanzeigers, oder einer Abdeckscheibe eines Sensors bzw. ein Element eines Kühlergrills eines Kraftfahrzeuges handeln.

Ebenso kann die Erfindung als ein Kraftfahrzeugscheinwerfer umfassend ein erfindungsgemäßes schutzbeschichtetes lichtdurchlässiges KFZ-Außenbauteil in Form einer Abdeckscheibe ausgeführt sein.

Die Erfindung betrifft weiters ein Kraftfahrzeug umfassend ein erfindungsgemäßes schutzbeschichtetes lichtdurchlässiges KFZ-Außenbauteil.

Die Beschichtung ist damit frei von durch Lackieren einer mittels eines PVD-Prozesses aufgebrachtem Hardcoating-Material.

Anders ausgedrückt kann die Erfindung auch wie folgt beschrieben werden:
- Die Scheibe bzw. der Spritzgusskörper wird im Werkzeug gespritzt
- Durch Wechseln der Werkzeugkavität (Schiebetisch, Drehplatte ober Wendeplatte) wir in einem weiteren Schritt die Scheibe mit PU, insbesondere PUR, oder PUA geflutet
- Die Beschichtung ist werkzeuggebunden, wodurch eine konstante Schichtstärke und Oberflächenqualität gewährleistet ist.
- Narbung, Beschriftungen etc. werden exakt abgebildet
- Die Beschichtung kann transparent, aber auch eingefärbt, mit Flittereffekten etc. versehen sein.

Die Erfindung liefert dabei folgende Vorteile: Vollautomatische Fertigung der Streuscheibe inklusive Schutzbeschichtung in einem Arbeitsprozess durch
∘ Reduktion der Komplexität
∘ Reduktion des Platzbedarfes
∘ Reduktion der Umweltemissionen
∘ Steigerung der Qualität

Die Erfindung ist im Folgenden anhand einer beispielhaften und nicht einschränkenden Ausführungsform näher erläutert, die in den Figuren veranschaulicht ist. Darin zeigt
- Figur 1: eine schematische Darstellung eines Spritzgusswerkzeuges,
- Figur 2: eine Darstellung des Werkzeugs gemäß Fig. 1 im geschlossenen Zustand,
- Figur 3: das Werkzeug während des Spritzgussvorganges,
- Figur 4: den Spritzgusskörper auf der ersten Werkzeughälfte im geöffneten Zustand,
- Figur 5: das erste Spritzgusswerkzeug nach einer Drehung um 180° und gegenüberliegend zu einem dritten Spritzgusswerkzeug,
- Figur 6a: einen Eingriff der ersten Werkzeughälfte mit einer dritten Werkzeughälfte und schematisch den erfolgenden Beschichtungsvorgang,
- Figur 6b: eine weitere Variante des erfindungsgemäßen Verfahrens,
- Figur 7: das Entfernen der dritten Werkzeughälfte,
- Figur 8: den beschichteten Spritzgusskörper, und
- Figur 9: ein Kraftfahrzeug umfassend den beschichteten Spritzgusskörper nach Fig. 8.

In den folgenden Figuren bezeichnen - sofern nicht anders angegeben - gleiche Bezugszeichen gleiche Merkmale.

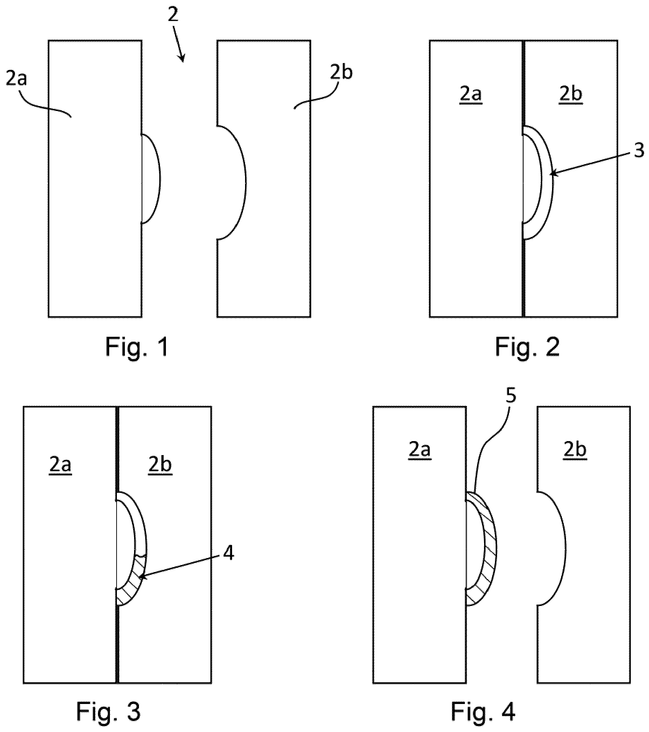

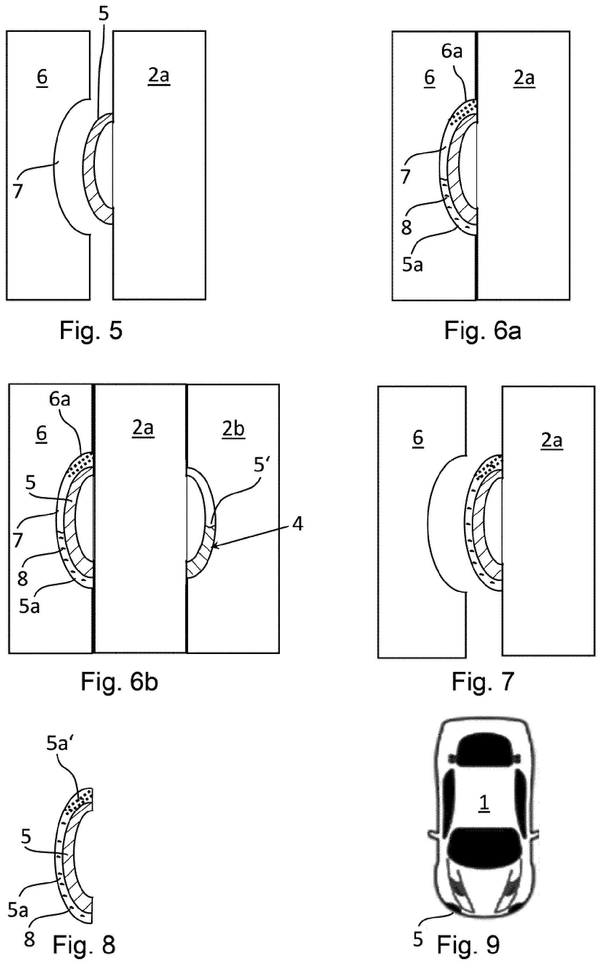

Fig. 1 zeigt eine schematische Darstellung eines Spritzgusswerkzeuges 2. Dieses Spritzgusswerkzeug 2 ist Teil einer in den Figuren nicht dargestellten Fertigungsanlage, mit der das erfindungsgemäße Verfahren zur vollautomatisierbaren prozessoptimierten Fertigung von lichtdurchlässigen KFZ-Außenbauteilen inklusive Schutzbeschichtung in Form beschichteter Spritzgusskörper umgesetzt werden kann. Dieses Verfahren umfasst die folgenden Schritte:
a) Bereitstellen eines Spritzgusswerkzeuges 2 umfassend eine erste Werkzeughälfte 2a und eine zweite Werkzeughälfte 2b, die zum Eingriff in die erste Werkzeughälfte 2a eingerichtet ist und dergestalt ausgebildet ist, dass im geschlossenen Zustand des Spritzgusswerkzeuges 2 zwischen der ersten und zweiten Werkzeughälfte 2a, 2b ein einen auszubildenden Spritzgusskörper festlegender erster Hohlraum 3 (siehe Fig. 2) ausgebildet und umschlossen wird, b) Schließen des Spritzgusswerkzeuges 2, c) Herstellen eines lichtdurchlässigen Spritzgusskörpers 5 durch Ausfüllen des ersten Hohlraumes 3 mit lichtdurchlässigem Spritzgussmaterial 4 (siehe Fig. 3 und 4), d) Exponieren einer zu beschichtenden Seite des Spritzgusskörpers 5 durch Entfernen der zweiten Werkzeughälfte 2b (siehe Fig. 4), e) Heranführen einer dritten Werkzeughälfte 6 (siehe Fig. 5) an die zu beschichtende Seite des Spritzgusskörpers 5 und Schließen mit der ersten Werkzeughälfte 2a, wobei die dritte Werkzeughälfte 6 dergestalt ausgebildet ist, dass zwischen der dritten Werkzeughälfte 6 und der zu beschichtenden Seite des Spritzgusskörpers 5 ein die Beschichtung 5a (siehe Fig. 6a) festlegender zweiter Hohlraum 7 verbleibt, f) Aufbringen der Schutzbeschichtung 5a durch Fluten des zweiten Hohlraumes 7 mit PUR Polyurethanreaktiv oder PUA Polyurethanacrylat, g) Aushärten der Beschichtung 5a für eine vorgebbare Zeitdauer t, h) Entnahme des beschichteten Spritzgusskörpers 5 (Fig. 7).

Das Spritzgussmaterial 4 kann aus Polycarbonat oder aus PMMA bestehen. Das Beschichten gemäß Schritt f) erfolgt vorzugsweise bei einer Temperatur des Spritzgusskörpers 5 und der Kontaktfläche 6a des dritten Spritzgusswerkzeuges 6 in Höhe zwischen 80° und 120°C. Vorzugsweise wird ebenso das Beschichtungsmaterial auf diesen Temperaturbereich vorgewärmt.

Die Zeitdauer t der Härtung beträgt gemäß Schritt g) zwischen t = 30 Sekunden und t = 4 Minuten, vorzugsweise weniger als 1 Minute beträgt und die Entnahme gemäß Schritt h) erst nach Ablauf dieser Zeitdauer erfolgt.

Insbesondere kann vorgesehen sein, dass die erste Werkzeughälfte 2a zum Lösen von der zweiten Werkzeughälfte 2b verschieb- oder verdrehbar gelagert ist. Im vorliegenden Ausführungsbeispiel ist die erste Werkzeughälfte 2a verdrehbar gelagert und die zweite Werkzeughälfte 2b nicht drehbar. Gemäß Fig. 4 wird zuerst der Spritzgusskörper 5 hergestellt, im Anschluss wird das Werkzeug 2 geöffnet und die erste Werkzeughälfte 2a mitsamt den darauf gehaltenen Spritzgusskörper 5 gedreht, und dann mit der auf einer gegenüberliegenden Seite liegenden dritten Werkzeughälfte 6 in Eingriff gebracht (siehe Fig. 5a).

Auch ist eine Verfahrensvariante denkbar, in der die erste Werkzeughälfte 2a zudem beidseitig zum Eingriff in die zweite Werkzeughälfte 2b ausgebildet ist, wie dies in Fig. 5b beispielhaft dargestellt ist. Damit kann mit jeder 180°-Drehung der ersten Werkzeughälfte 2a ein Schließen mit der zweiten Werkzeughälfte 2b ermöglicht werden, wobei das Spritzgusswerkzeug 2 weiters dazu eingerichtet ist, innerhalb des Zyklus der Ausbildung eines Spritzgusskörpers 5 im ersten Hohlraum 3 einen weiteren auf der gegenüberliegenden Seite der ersten Werkzeughälfte 2a liegenden Spritzgusskörper 5' durch Eingriff in die dritte Werkzeughälfte 6 ausgebildeten zweiten Hohlraum 7 zeitgleich in einem Schritt f) zu beschichten.

In Figur 7 ist erkennbar, dass die die Beschichtung 5a begrenzende Fläche 6a der dritten Werkzeughälfte 6 eine Strukturierung 6a' aufweist. Auf diese Weise kann die korrespondierende Außenfläche der Beschichtung 5a matt bzw. lichtstreuend ausgebildet werden. Auch können Informationen (Logos, Kennbuchstaben, etc.) in die Beschichtung eingebettet werden. Eine solche Oberflächengestaltung 5a' ist schematisch in Figuren 7 und 8 dargestellt.

Figur 8 zeigt den beschichteten Spritzgusskörper 5. Der zweite Hohlraum 7 gemäß Schritt e) ist dabei dergestalt ausgebildet gewesen, dass die Schichtdicke d gemäß Schritt f) zwischen 0,3mm und 1mm beträgt. Darin beispielsweise eine Beschichtung 5a angedeutet, in die in Schritt f) lichtstreuende und/oder zumindest teilweise lichtabsorbierende Designpartikel 8 eingebracht wurden.

Figur 9 zeigt ein Kraftfahrzeug 1 umfassend den beschichteten Spritzgusskörper 5 nach Fig. 8 in Form einer Abdeckscheibe eines Kraftfahrzeugscheinwerfers.

Die Erfindung ist nicht auf die gezeigte Ausführungsform beschränkt, sondern durch den gesamten Schutzumfang der Ansprüche definiert. Auch können einzelne Aspekte der Erfindung bzw. der Ausführungsform aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Verfahren zur vollautomatisierbaren prozessoptimierten Fertigung von lichtdurchlässigen KFZ-Außenbauteilen inklusive Schutzbeschichtung in Form beschichteter Spritzgusskörper, umfassend die folgenden Schritte:
a) Bereitstellen eines Spritzgusswerkzeuges (2) umfassend eine erste Werkzeughälfte (2a) und eine zweite Werkzeughälfte (2b), die zum Eingriff in die erste Werkzeughälfte (2a) eingerichtet ist und dergestalt ausgebildet ist, dass im geschlossenen Zustand des Spritzgusswerkzeuges (2) zwischen der ersten und zweiten Werkzeughälfte (2a, 2b) ein einen auszubildenden Spritzgusskörper festlegender erster Hohlraum (3) ausgebildet und umschlossen wird,
b) Schließen des Spritzgusswerkzeuges (2),
c) Herstellen eines lichtdurchlässigen Spritzgusskörpers (5) durch Ausfüllen des ersten Hohlraumes (3) mit lichtdurchlässigem Spritzgussmaterial (4),
d) Exponieren einer zu beschichtenden Seite des Spritzgusskörpers (5) durch Entfernen der zweiten Werkzeughälfte (2b),
e) Heranführen einer dritten Werkzeughälfte (6) an die zu beschichtende Seite des Spritzgusskörpers (5) und Schließen mit der ersten Werkzeughälfte (2a), wobei die dritte Werkzeughälfte (6) dergestalt ausgebildet ist, dass zwischen der dritten Werkzeughälfte (6) und der zu beschichtenden Seite des Spritzgusskörpers (5) ein die Beschichtung (5a) festlegender zweiter Hohlraum (7) verbleibt,
f) Aufbringen der Schutzbeschichtung (5a) durch Fluten des zweiten Hohlraumes (7) mit PU Polyurethan, insbesondere PUR Polyurethanreaktiv, oder PUA Polyurethanacrylat,
g) Aushärten der Schutzbeschichtung (5a) für eine vorgebbare Zeitdauer t,
h) Entnahme des beschichteten Spritzgusskörpers (5).

2. Verfahren nach Anspruch 1, wobei der zweite Hohlraum (7) gemäß Schritt e) dergestalt ausgebildet ist, dass die Schichtdicke (d) gemäß Schritt f) zwischen 0,3mm und 1mm beträgt.

3. Verfahren nach Anspruch 1 oder 2, wobei die Beschichtung aus reaktivem Polyurethan besteht, wobei diese Beschichtung durch gleichzeitige Zufuhr zweier Komponenten während des Flutens gemäß Schritt f) erfolgt, nämlich PU und eines Reaktivmaterials zur Härtung des PU.

4. Verfahren nach Anspruch 3, wobei das Reaktivmaterial aus Isocyanat besteht.

5. Verfahren nach einem der vorhergehenden Ansprüche, wobei das Beschichten gemäß Schritt f) bei einer Temperatur des Spritzgusskörpers (5) und der Kontaktfläche (6a) des dritten Spritzgusswerkzeuges in Höhe zwischen 80° und 120°C erfolgt.

6. Verfahren nach einem der vorhergehenden Ansprüche, wobei in Schritt f) das Material, durch das die Beschichtung (5a) ausgebildet wird, mit einer Temperatur zwischen 80° C und 120°C eingebracht wird.

7. Verfahren nach einem der vorhergehenden Ansprüche, wobei das Spritzgussmaterial (4) aus Polycarbonat besteht.

8. Verfahren nach einem der vorhergehenden Ansprüche, wobei das Spritzgussmaterial (4) aus PMMA besteht.

9. Verfahren nach einem der vorhergehenden Ansprüche, wobei die Zeitdauer t der Härtung gemäß Schritt g) zwischen 30 Sekunden und 4 Minuten, vorzugsweise weniger als 1 Minute beträgt und die Entnahme gemäß Schritt h) erst nach Ablauf dieser Zeitdauer erfolgt.

10. Verfahren nach einem der vorhergehenden Ansprüche, wobei das Herstellen des lichtdurchlässigen Spritzgusskörpers (5) gemäß Schritt c) unter Heranziehung eines transparenten Materials erfolgt.

11. Verfahren nach einem der vorhergehenden Ansprüche, wobei die die Beschichtung begrenzende Fläche (6a) der dritten Werkzeughälfte (6) eine Strukturierung aufweist.

12. Verfahren nach einem der vorhergehenden Ansprüche, wobei in die Beschichtung (5a) in Schritt f) lichtstreuende und/oder zumindest teilweise lichtabsorbierende Designpartikel (8) eingebracht werden.

13. Verfahren nach einem der vorhergehenden Ansprüche, wobei die erste Werkzeughälfte (2a) zum Lösen von der zweiten Werkzeughälfte (2b) verschieb- oder verdrehbar gelagert ist.

14. Verfahren nach einem der vorhergehenden Ansprüche, wobei die erste Werkzeughälfte (2a) um 180° verdrehbar gelagert ist, wobei die erste Werkzeughälfte (2a) zudem beidseitig zum Eingriff in die zweite Werkzeughälfte (2b) ausgebildet ist, und damit mit jeder 180°-Drehung ein Schließen mit der zweiten Werkzeughälfte (2b) ermöglicht, wobei das Spritzgusswerkzeug (2) weiters dazu eingerichtet ist, innerhalb des Zyklus der Ausbildung eines Spritzgusskörpers (5) im ersten Hohlraum (3) einen weiteren auf der gegenüberliegenden Seite der ersten Werkzeughälfte (2a) liegenden Spritzgusskörper (5') durch Eingriff in die dritte Werkzeughälfte (6) ausgebildeten zweiten Hohlraum (7) zeitgleich in einem Schritt f) zu beschichten.

15. Schutzbeschichtetes lichtdurchlässiges KFZ-Außenbauteil in Form eines beschichteten Spritzgussbauteils (5) hergestellt nach einem Verfahren gemäß einem der vorhergehenden Ansprüche.

16. Schutzbeschichtetes lichtdurchlässiges KFZ-Außenbauteil nach Anspruch 15, ausgebildet als Abdeckscheibe eines Kraftfahrzeugscheinwerfers.

17. Kraftfahrzeug (1) umfassend ein schutzbeschichtetes lichtdurchlässiges KFZ-Außenbauteil nach Anspruch 15 oder 16.
